# EUROPEAN PATENT APPLICATION

(11) **EP 1 223 651 A1**
(43) Date of publication of application: **17.07.2002**
(21) Application number: 02075078.2
(22) Date of filing: 11.01.2002
(51) Int. Cl.: H02G 9/10

(54) **Underground placeable cable junction box**

(30) Priority: 12.01.2001 NL 1017089
(71) Applicant: van Eijndhoven International B.V., 5126 PP Gilze (NL); Jacobs, Joep Cornelis Wilhelmus, 4834 PH Breda (NL)
(72) Inventor: Jacobs, Joep Cornelis Wilhelmus, 4834 PH Breda (NL)
(74) Representative: Dokter, Hendrik Daniel

(57) **Abstract**

Housing for an underground cable junction, which substantially comprises an underground placeable carrier element and a gas-tight and liquid-tight container with open underside which can support on this carrier element, which container forms a bell in a situation where the open underside is protrudes into a liquid, which carrier element substantially comprises a horizontally placeable base element and wall elements standing from this base element, wherein the container can support on the wall elements, and the base element is provided with a peripheral edge extending outside the vertical projection of the container for allowing an outer wall closed in peripheral direction to rest thereon, which outer wall forms a well closable on its upper side by a well cover and having a height such that the container is confined precisely in vertical direction by the well cover.

## Description

The invention relates to a housing for an underground cable junction.

Such a housing is known from the Netherlands patent no. 1011825, for instance as housing of an electricity cabinet of a utility company, as housing for a cabinet for a cable network or as housing for a switch box for traffic lights.

The known housing consists of a container which has in the upper wall an opening closable by a cover, which container is intended for recessed arrangement in the ground, wherein the cover lies at the height of the ground surface, and in which container a lifting mechanism is arranged for lowering through said opening electrical elements to be accommodated in the container or for raising these elements.

In the normal situation of use the known housing is situated wholly under ground level and is therefore not exposed to vandalism or the dangers of unintended damage caused for instance by traffic.

Associated with the known housing is the risk that after a period of time the cover will no longer close the container in liquid-tight manner, as a result of which rainwater can enter the container, or that groundwater will seep into the container as a result of leakage in the base. Another drawback of the known container is the necessary presence of a lifting mechanism, which has the effect of increasing the cost of purchase and maintenance compared to for instance housings placeable above the ground.

It is an object of the invention to provide a housing for an underground cable junction which, even after a period of time, will provide an adequate protection from the risk of penetration of groundwater or rainwater.

It is a further object to provide a housing wherein elements, for instance cable junctions, enclosed by this housing are accessible in simple manner and without assist means which increase the cost price.

These objectives are achieved, and further advantages gained, with a housing of the type specified in the preamble which according to the invention substantially comprises an underground placeable carrier element and a gas-tight and liquid-tight container with open underside which can support on this carrier element, which container forms a bell in a situation where the open underside protrudes into a liquid.

Such a gas-tight and liquid-tight container precludes the entry of rainwater into the interior of the container since the container does not have on its top an opening closable with a cover. The entry of groundwater is prevented in that the container forms a bell as soon as the open underside is placed wholly in rising groundwater. As the groundwater rises further, the air in the container is compressed until an equilibrium is created between the hydrostatic pressure of the rising groundwater and the air pressure in the container.

In one embodiment according to the invention the container is manufactured integrally, for instance by injection moulding from a suitable plastic material or by pressing of a suitable sheet metal.

In a subsequent embodiment the container is manufactured from gas-tight and liquid-tight plate parts mutually connected in gas-tight and liquid-tight manner.

In an advantageous embodiment the container is manufactured from high-density polyethylene (HDPE).

The container is preferably formed by a cover part and wall parts depending from this cover part and mutually connected in peripheral direction of this container, which cover part has an inclination relative to the horizon when the container supports on a carrier element placed underground.

The inclination of the cover part achieves that drops of condensation water forming on the underside of the cover part do not drop downward from the position at which they form and thus fall onto electrical elements or cable junctions in the container, but instead slide along the underside of the inclining cover part to a wall part, and then slide downward along that wall part.

In a structurally advantageous embodiment of a housing according to the invention the carrier element substantially comprises a horizontally placeable base element and wall elements standing from this base element, wherein the container can support on the wall elements,

In a housing according to the invention the carrier element is for instance provided with a mounting panel for fixing cables thereon, which mounting panel preferably rests removably on the carrier element.

In another embodiment the base element is provided with at least one inlet opening for feeding a cable into the housing, wherein the base element is preferably provided with a pull relief for a cable.

In another embodiment the base element is provided with a peripheral edge extending outside the vertical projection of the container for allowing an outer wall closed in peripheral direction to rest thereon, which outer wall forms in an advantageous embodiment a well closable on its upper side by a well cover and having a height such that the container is confined precisely in vertical direction by the well cover.

The invention will be elucidated hereinbelow on the basis of an embodiment and with reference to the drawings.

In the drawings
Fig. 1 shows in perspective view an embodiment of a housing according to the invention, and
Fig. 2 shows in side view the housing of fig. 1 placed in an underground well.

Corresponding components are designated in the drawings by the same reference numerals.

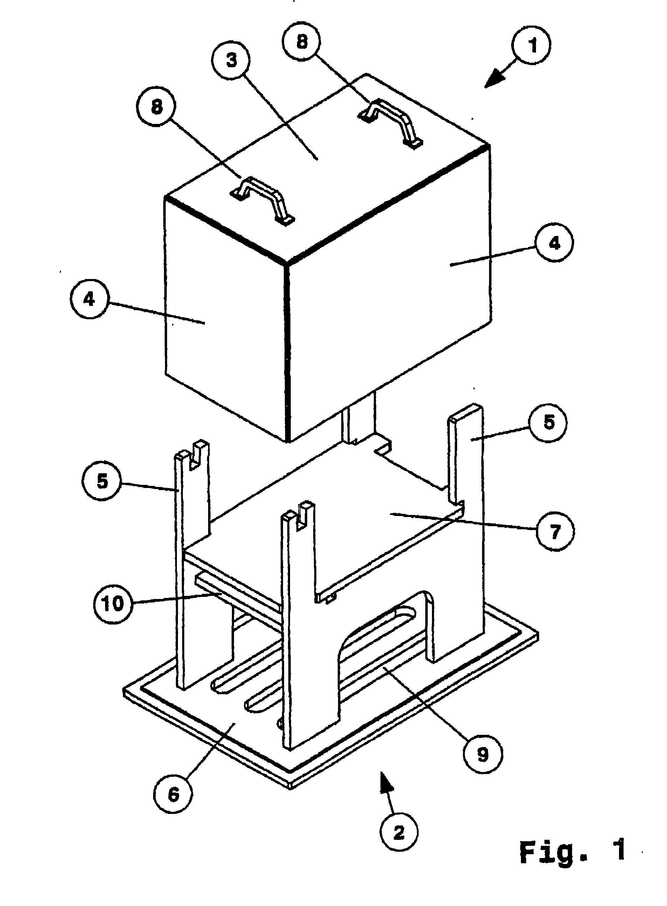

Fig. 1 shows a housing formed by a gas-tight and liquid-tight container 1 with open underside, which container 1 can support on an underground placeable carrier element 2. Container 1 is manufactured from gas-tight and liquid-tight plate parts 3, 4, for instance of high-density polyethylene (HDPE), which are mutually connected in gas-tight and liquid-tight manner. When container 1 supports on carrier element 2, the container 1 rests with its cover part 3 on wall elements 5 which stand upright from a horizontally placeable base plate 6 of carrier element 2, and container 1 forms a bell in the situation where the open underside protrudes into a liquid. A removable mounting panel 7 is supported by wall elements 5. The figure further shows handles 5 for container 1, slots 9 in base plate 6 which form an inlet opening for feeding a cable into the housing, and a transverse connection 10 between two opposite wall elements 5.

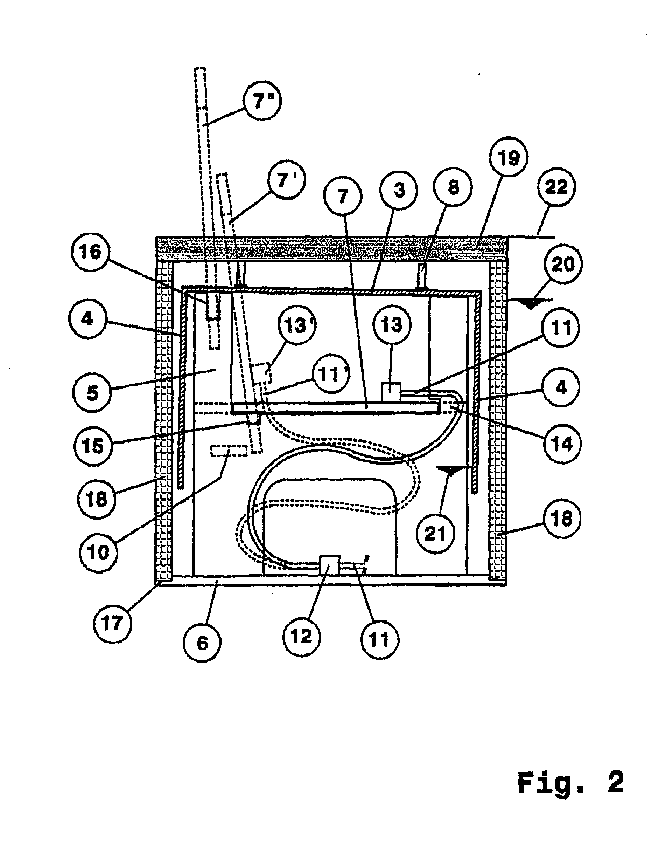

Fig. 2 shows the housing of fig. 1 in the situation of use, wherein cover 3 of container 1 rests on upright wall parts 5 of carrier element 2. Wall element 5 has an H-shape, wherein in the shown situation recesses 14, 15, 16 are formed respectively in the inner side of the right-hand leg, on the left in the top side of the connecting leg and in the top part of the right-hand leg. On the connecting leg and in the recess 14 of the right-hand leg of H-shaped wall part 5 there rests mounting panel 7, on which a cable 11 is fixed with a clamp 13, which cable is fed into the housing via the slots 9 in base plate 6 shown in fig. 1 and which is anchored to base plate 6 using a pull relief 12. The left-hand leg of H-shaped wall parts 5 have a slightly greater length that the right-hand leg, as a result of which the cover part 3 of container 1 has an inclination relative to the horizon, so that condensation water forming on the underside of cover 3 can slide along cover 3 (in this case to the right) and then downward along a wall part 4, and does not drop onto mounting plate 7. Base plate 6 is provided with a peripheral edge 17 which projects outside the vertical projection of the container and on which rest outer walls 18 of concrete, foamed polycarbonate or other suitable material, which form a well in peripheral direction. This well is closed at its top by a well cover 19, the upper side of which lies at or just below ground level 22. The well has a height such that the container is confined precisely by well cover 19 in vertical direction. Well cover 19 is preferably anchored to outer walls 18 so that the assembly of outer walls 18 and well cover 19 has sufficient mass to withstand the upward pressure exerted by container 3, 4 if the underside of the wall parts 4 thereof protrude into the groundwater level (indicated schematically outside and inside the container by respective level lines 20, 21), and the container begins to act as bell, wherein the air pressure in the container is in equilibrium with the hydrostatic pressure of the water level 21 in this container. Although in the situation of use the container is recessed into the ground, it is readily possible to fix cables or other elements on mounting panel 7 in a situation where this panel is situated partly or for the greater part above ground level 22. For this purpose the mounting panel can be placed in recesses 15, 16 in respectively the top part of the connecting leg and the upper part of the right-hand leg of the H-shaped wall parts 5, as shown by broken lines 7' respectively 7". The cable 11' and cable clamp 13', shown in broken lines, mounted on panel 7' herein move upward to a level just below the ground surface 22 or, if the cable length is sufficient (not shown), above the ground surface 22.

## Claims

1. Housing for an underground cable junction, **characterized in that** this substantially comprises an underground placeable carrier element (2) and a gas-tight and liquid-tight container (1) with open underside which can support on this carrier element (2), which container (1) forms a bell in a situation where the open underside protrudes into a liquid.

2. Housing as claimed in claim 1, **characterized in that** the container (1) is manufactured integrally.

3. Housing as claimed in claim 1, **characterized in that** the container (1) is manufactured from gas-tight and liquid-tight plate parts (3, 4) mutually connected in gas-tight and liquid-tight manner.

4. Housing as claimed in any of the claims 1-3, **characterized in that** the container (1) is manufactured from high-density polyethylene (HDPE).

5. Housing as claimed in any of the claims 1-4, **characterized in that** the container (1) is formed by a cover part (3) and wall parts (4) depending from said cover part (3) and mutually connected in peripheral direction of said container (1), which cover part (3) has an inclination relative to the horizon when the container supports on a carrier element (2) placed underground.

6. Housing as claimed in any of the claims 1-5, **characterized in that** the carrier element (2) substantially comprises a horizontally placeable base element (6) and wall elements (5) standing from said base element (6), wherein the container (1) can support on the wall elements (5).

7. Housing as claimed in any of the claims 1-6, **characterized in that** the carrier element (2) is provided with a mounting panel (7, 7', 7") for fixing cables (11, 11') thereon.

8. Housing as claimed in claim 7, **characterized in that** the mounting panel (7, 7', 7") rests removably on the carrier element (2).

9. Housing as claimed in any of the claims 6-8, **characterized in that** the base element (6) is provided with at least one inlet opening (9) for feeding a cable (11) into the housing.

10. Housing as claimed in claim 9, **characterized in that** the base element (6) is provided with a pull relief (12) for a cable (11).

11. Housing as claimed in any of the claims 6-10, **characterized in that** the base element (2) is provided with a peripheral edge (17) extending outside the vertical projection of the container for allowing an outer wall (18) closed in peripheral direction to rest thereon.

12. Housing as claimed in claim 11, **characterized in that** the outer wall (18) forms a well closable on its upper side by a well cover (19) and having a height such that the container (3, 4, 8) is confined precisely in vertical direction by the well cover (19).
